# EUROPEAN PATENT APPLICATION

(11) **EP 4 837 930 A1**
(43) Date of publication of application: **11.11.2026**
(21) Application number: 25174168.2
(22) Date of filing: 05.05.2025
(51) Int. Cl.: C08G 18/16, B32B 27/04, B32B 27/40, C08G 18/18, C08G 18/24, C08G 18/32, C08G 18/48, C08G 18/66, C08G 18/76

(54) **METHOD FOR PREPARING POLYURETHANE COMPOSITES**

(71) Applicant: Covestro Deutschland AG, 51373 Leverkusen (DE)
(72) Inventor: WU, Pengfei, Shanghai, 201206 (CN); LI, Liqiang, Shanghai, 201206 (CN); XI, Bangwei, Shanghai, 200011 (CN); SHA, Haopeng, Shanghai, 201208 (CN); GU, Lifeng, Shanghai, 201112 (CN)
(74) Representative: Levpat

(57) **Abstract**

The present invention provides a method for preparing polyurethane composites by transfer molding process, comprising the following steps: spraying, injecting or pouring a polyurethane composition onto at least one surface of at least one fiber layer by means of spraying, injecting or pouring, to obtain a prefabricated component; placing the prefabricated component into a mold with a mold temperature of 50-180°C, closing the mold for hot pressing, applying a mold clamping pressure of 0.5-10MPa on the mold during hot pressing, and demolding. The composites of the present invention are suitable for use in shells for electric vehicle batteries, especially for the upper cover and bottom cover, and can be used to produce parts with the same performance at a lower cost.

## Description

### Technical Field

The present invention relates to the field of polyurethane composites, especially to a method for preparing polyurethane composites.

### Prior Art

The market share and demand for electric vehicles are increasing year by year. Good flame retardancy, air tightness, and weather resistance are usually required for battery packs used in electric vehicles.

In order to meet the requirements of battery packs, the upper cover or bottom cover of battery packs are mainly prepared by high-pressure resin transfer molding (HP-RTM) process and prepreg compression molding (PCM) process in conventional processes. The high equipment investment, complex process, and high personnel involvement in conventional processes result in high costs for products. However, the conventional spray transfer molding (STM) process may result in a large amount of bubbles in the component, leading to poor air tightness. Usually, additional sandwich layers are needed as auxiliary materials to improve air tightness. A common approach is to add a thermoplastic polyurethane (TPU) film, which not only increases the cost of the component, but also makes the process operation more complex.

CN114672149A discloses a lightweight, thin, and flame-retardant polyurethane composite, which is mainly used for manufacturing covering products and can be used as an upper cover for battery packs. The application also discloses a spray transfer molding process for preparing the polyurethane composite. The polyol components used therein include polyols, optional chain extenders and/or crosslinkers, flame retardants, optional fillers, foaming agents, catalysts, and optional additives and/or auxiliaries. The polyurethane formula must contain foaming agents, which will result in a risk of air tightness on the battery cover, and is not conducive to the design of the battery pack.

CN112011027A discloses a method for preparing polyurethane composites by high-pressure injection molding process, comprising mixing an isocyanate component and an isocyanate reactive component, injecting the mixture into a mold with a built-in reinforcing material under a pressure of 80-200 bar, controlling the vacuum degree of the mold to be -0.08-0.1 MPa in the injection process, and obtaining the composite after the reaction is finished; wherein the isocyanate-reactive component comprises a polyether polyol, a catalyst; and the catalyst comprises at least one thermosensitive catalyst with an activation temperature of not less than 50°C. The preparation method requires a pressure of at least 80 bar when injecting polyurethane mixture into the mold, and comparative examples show that when the polyurethane is of the same formula but the pressure does not meet the requirements, the composite sample is of poor wettability, and there are multiple exposed glass fibers on the inner and outer surfaces of the product, and there are obvious air bubbles and voids inside the composite plate, which results in that no strip meeting the mechanical performance testing standards could be obtained on the entire composite sample for performance testing.

Therefore, it is necessary to develop a polyurethane composite formula that is suitable for spray transfer molding process without the above-mentioned defects, and the preparation process thereof.

### Summary of the invention

The present invention provides a method for preparing polyurethane composites by transfer molding process, comprising the following steps: spraying, injecting or pouring a polyurethane composition onto at least one surface of at least one fiber layer to obtain a prefabricated component;
hot pressing the prefabricated component in a mold with a mold temperature of 50-180°C, and demolding;
wherein the polyurethane composite comprises 40%-75% of fiber layer and 25%-60% of polyurethane resin, based on the total mass of the polyurethane composite; and
wherein the polyurethane resin is obtained from the polyurethane composition comprising:
   component A: one or more organic polyisocyanates;
   component B: an isocyanate reactive component comprising one or more organic polyols and optionally a chain extender and/or a crosslinker,
   wherein the content of the isocyanate reactive component is 20%-95%, preferably 30%-85%, based on the total mass of components B to E; and
   wherein the average functionality of the isocyanate reactive component is 3.01-8.0, preferably 3.01-7.0;
   component C: a catalyst mixture comprising at least one thermosensitive catalyst C1 and at least one organometallic catalyst C2;
   wherein the content of the thermosensitive catalyst C1 is 0.15%-0.9%, and the content of the organometallic catalyst C2 is 0.001%-0.5%, based on the total mass of components B to E;
   optionally, component D: a flame retardant; and
   optionally, component E: an additive;
   wherein the molar ratio of isocyanate groups in component A to active hydrogen in component B is 0.9-1.5, preferably 0.95-1.3; and
   wherein the fiber layer comprises at least one layer of fiber felt and/or fiber fabric.

In the present invention, the total mass of components B to E refers to the sum of mass of components B, C, D, and E.

The present invention also provides a polyurethane composite obtained by the method for preparing polyurethane composites by transfer molding process.

The present invention also provides a polyurethane composition for preparing polyurethane composites by transfer molding process, comprising the following components:
component A: one or more organic polyisocyanates;
component B: an isocyanate reactive component comprising one or more organic polyols, and optionally a chain extender and/or a crosslinker,
and the content of the isocyanate reactive component is 20%-95%, preferably 30%-85%, based on the total mass of components B to E; and the average functionality of the isocyanate reactive component is 3.01-8.0, preferably 3.01-7.0;
component C: a catalyst mixture comprising at least one thermosensitive catalyst C1 and at least one organometallic catalyst C2,
wherein the content of the thermosensitive catalyst C1 is 0.15%-0.9%, preferably 0.15-0.8%, and the content of the organometallic catalyst C2 is 0.001%-0.5%, based on the total mass of components B to E;
optionally, component D: a flame retardant; and
optionally, component E: an additive;
wherein the molar ratio of isocyanate groups in component A to active hydrogen in component B is 0.9-1.5, preferably 0.95-1.3.

The present invention further provides use of the polyurethane composition in the transfer molding process.

The present invention further provides an article comprising the polyurethane composite, which is preferably the upper cover, bottom cover or housing of the battery pack for electric vehicles or energy storage boxes, or the housing of energy storage boxes and similar product applications in this technical field.

### Embodiments

### General definitions and terms

Unless indicated otherwise, all publications, patent applications, patents and other references mentioned herein are incorporated herein by reference.

Unless defined otherwise, all technical and scientific terms used herein have the same meaning as commonly understood by those skilled in the art. In case of conflict, the definition provided herein shall prevail.

Unless stated otherwise, all percentages, parts, proportions, etc. are by weight. Those skilled in the art should understand that the sum of all components in the composition may be appropriately 100%. When quantity, concentration or other values or parameters are given as ranges, preferred ranges or preferred upper and lower limit values or specific values, it should be understood that all ranges formed by the paired values of any upper limit range or preferred value and any lower limit range or preferred value are specifically disclosed, regardless of whether the ranges are separately disclosed. Unless stated otherwise, when a numerical range is referenced herein, the range includes its endpoints, and all integers and fractions within the range.

When the term "about" or "approximately" is used with a numerical variable, it generally means that the value of the variable and all values of the variable are within the experimental error (for example, within the 95% confidence interval of the mean value) or within ± 10% of the specified value, or within a wider range.

The term "optional" or "optionally" as used herein indicates that the event or situation described may or may not occur, which includes the occurrence and non-occurrence of the event or situation, as well as the optional selection of the content described. For example, when the content of a component herein is of 0% to 5%, it means that the component may be optionally present, that is, both the case of absence (0%) and presence (>0-5%) are covered.

The terms "including", "comprising", "having", "containing" or "involving" and other variations thereof herein are inclusive or open, and do not exclude other elements or process steps not listed. Those skilled in the art should understand that the above terms such as "including" cover the meaning of "consisting of". The expression "consisting of" excludes any unspecified elements, steps or ingredients. The expression "substantially consisting of" means that the scope is limited to the specified elements, steps or components, as well as optional elements, steps or components that will not materially affect the basic and new features of the subject matter to be protected. It should be understood that the expression "comprising" covers the expressions "substantially consisting of" and "consisting of". The term "selected from..." refers to one or more elements in the group listed below, which are selected independently, and may include a combination of two or more elements.

The term "one or more" or "at least one" as used herein refers to one, two, three, four, five, six, seven, eight, nine or more.

The terms "and/or" used herein include "and" and "or". A plurality of elements, parts or steps defined by "and/or" represent any one of the elements, parts or steps and any combination thereof. For example, "A and/or B" covers A, B and A+B; "A, B and/or C" covers A, B, C, A+B, A+C, B+C and A+B+C.

Unless stated otherwise, the terms "combination thereof", "any combination thereof" and "mixture thereof" refer to multi-component mixtures of the said elements, such as mixtures of two, three, four and up to maximum possible number of components.

In addition, if no number is indicated in front of the part or component in the present invention, it means that there is no limit on the occurrence (or existence) number of the part or component. Therefore, it should be interpreted as including one or at least one, and the singular form of the part or component also includes the plural, unless the number clearly indicates the singular.

Herein, "multiple" or "several" means two or more with no specific requirements for which one, unless specified otherwise. Unless explicitly stated in the context, "a" may cover the singular and the plural.

The present invention provides a method for preparing polyurethane composites by transfer molding process, comprising the following steps:
spraying, injecting or pouring a polyurethane composition onto at least one surface of at least one fiber layer to obtain a prefabricated component;
hot pressing the prefabricated component in a mold with a mold temperature of 50-180°C, and demolding;
wherein the polyurethane composite comprises 40%-75% of fiber layer and 25%-60% of polyurethane resin, based on the total mass of the polyurethane composite; and
wherein the polyurethane resin is obtained from the polyurethane composition comprising:
   component A: one or more organic polyisocyanates;
   component B: an isocyanate reactive component comprising one or more organic polyols and optionally a chain extender and/or a crosslinker,
   wherein the content of the isocyanate reactive component is 20%-95%, preferably 30%-85%, based on the total mass of components B to E; and
   wherein the average functionality of the isocyanate reactive component is 3.01-8.0, preferably 3.01-7.0;
   component C: a catalyst mixture comprising at least one thermosensitive catalyst C1 and at least one organometallic catalyst C2;
   wherein the content of the thermosensitive catalyst C1 is 0.15%-0.9%, and the content of the organometallic catalyst C2 is 0.001%-0.5%, based on the total mass of components B to E;
   optionally, component D: a flame retardant; and
   optionally, component E: an additive;
   wherein the molar ratio of isocyanate groups in component A to active hydrogen in component B is 0.9-1.5; and
   wherein the fiber layer comprises at least one layer of fiber felt and/or fiber fabric.

In the present invention, the thermosensitive catalyst C1 is a catalyst that can accelerate catalysis or has catalytic activity at a temperature above 50°C, preferably at a temperature in the range of 50°C to 180°C, which is usually a blocked amine catalyst and/or a blocked amidine catalyst, including acid or phenol blocked amine catalysts and/or amidine catalysts (acid or phenol blocked amine salts and/or amidine salts). The thermosensitive catalyst used in the present invention can be a commercially available product, which can be blocked by reacting amines and/or amidines with a carboxylic acid or a phenol. The carboxylic acid may be one or more of formic acid, ethylhexanoic acid, acetic acid, oleic acid, isooctanoic acid, methacrylic acid, trifluoroacetic acid, benzoic acid, cyanoacetic acid, and 5-hydroxyisophthalic acid. The phenol may be one or more of phenol, catechol, and 2-hydroxyacetophenone. The amine catalyst may be a tertiary amine, a salt and/or complex thereof, such as one or more of 1,4-diazabicyclo[2.2.2]octane (DABCO), bis(dimethylaminoethyl)ether, trimethylamine, triethylamine, tripropylamine, tributylamine, dimethylcyclohexylamine, dimethylbenzylamine, dibutylcyclohexylamine, dimethylethanolamine, triethanolamine, diethylethanolamine, ethyldiethanolamine, dimethylisopropanolamine, dimethyloctylamine, triisopropanolamine, triethylenediamine, tetramethyl-1,3-butanediamine, N,N,N',N'-tetramethylethylenediamine, N,N,N',N'-tetramethyl-1,6-hexanediamine, N,N,N',N',N'-pentamethyldiethylenetriamine, bis(2-dimethylaminoethoxy)methane, N,N,N'-trimethyl-N'-(2-hydroxyethyl)ethylenediamine, N,N-dimethyl-N',N'-(2-hydroxyethyl)ethylenediamine, tetramethylguanidine, N-methylpyridine, N-ethylpyridine, N-methylmorpholine, N-ethylmorpholine, 1,4-dimethylpiperidine, 1,2,4-trimethylpiperidine, N-(2-dimethylaminoethyl)morpholine, and 1-methyl-4-(2-dimethylamino)piperidine. The amidine catalyst may be an amidine compound, a salt and/or complex thereof, such as 1,8-diazabicyclo[5.4.0]undec-7-ene (DBU) and/or 1,5-diazabicyclo[4.3.0]non-5-ene (DBN).

In the present invention, the thermosensitive catalyst C1 may be, for example, DABCO 8154 (acid blocked DABCO), DABCO BL-17 (acid blocked bis(dimethylaminoethyl)ether), DABCO WT, DABCO KTM 60, Polycat^{®} SA-1/10 (phenol blocked DBU), Polycat^{®} SA-1, Polycat^{®} SA-2, Polycat^{®} SA-8, Polycat^{®} SA-101, Polycat^{®} SA-102, Polycat^{®} SA-102/10 or Polycat^{®} SA-610/50 from Evonik; Toyocat^{®} DB 2, DB 30, DB 31, DB 40, DB 41, DB 42, DB 60 or DB 70 from Tosoh Corporation; ACCELERATOR DY 9577 from Huntsman Corporation; WANALYST KC110 or WANALYST KC101 from Wanhua Chemical; CUCAT-RM90, RM60, RM301, RM401 or RM9100 from Guangzhou Yourun Synthetic Materials Co., Ltd; and Niax^{™} catalyst A-577 or Niax^{™} catalyst A-575 from Momentive.

The content of the thermosensitive catalyst C1 in the present invention is in a range of 0.15%-0.9%, preferably 0.15%-0.8%, based on the total mass of components B to E. When the polyurethane composition contains an appropriate amount of thermosensitive catalyst, which is in combination with other components, especially an organometallic catalyst, good surface effects of the product can be achieved with the number of bubbles and pinholes per square meter being controlled within the range of 0-10, or even 0. When high content of thermosensitive catalyst is used, the effect for reducing surface defects of the product is poor.

In the present invention, the organometallic catalyst C2 may comprise a metal carboxylate and/or a metal alkyl compound, and the metal element is mainly one or more of tin, potassium, titanium, zirconium, hafnium, bismuth, zinc, aluminum, and iron, preferably one or more of potassium, tin, and bismuth. The organometallic catalyst C2 may be an organotin catalyst, such as one or more of dibutyltin dilaurate, stannous octoate, tin octanoate, dioctyltin dithiol, dibutyltin oxide, dibutyltin diacetate, di(dodecylthio)dibutyltin, tin acetate, tin ethylhexanoate, tin laurate, dibutyltin diacetate, dibutyltin maleate, and dioctyltin diacetate. The organometallic catalyst C2 may also be an organopotassium catalyst, such as one or more of potassium acetate, potassium formate, potassium isooctanoate, and potassium acetate. The organometallic catalyst C2 may also be an organobismuth catalyst, such as one or more of bismuth carboxylate, bismuth neodecanoate, bismuth ethylhexanoate, and bismuth octanoate.

In the present invention, the typical metal catalyst may be, for example, UL-6, UL-28, UL29, or UL-32 from Momentive.

In the present invention, the content of the organometallic catalyst C2 is in a range of 0.001%-0.5%, preferably 0.002%-0.2%, based on the total mass of components B to E.

In terms of chemical structure, polyurethane is a polymer containing carbamate repeat units. In the sense of the present invention, it includes the addition products of polyfunctional isocyanates and polyols (sometimes, although not completely correct, also called polycondensation products). In addition to the basic polyurethane structure mentioned above, polyurethane products usually comprise other structures, such as those with urea bond. The polyurethane with these structures other than the pure basic polyurethane structure and the basic polyurethane structure is also included in the scope of the polyurethane of the present invention, and does not depart from the scope of the present invention. The polyurethane in the present invention is a thermosetting polyurethane.

In the present invention, the component A comprises one or more organic polyisocyanates, preferably consists of one or more organic polyisocyanates.

The organic polyisocyanate may be organic polyisocyanates containing active isocyanate groups (-NCO) known for preparing polyurethanes, including one or more of any pure aliphatic, alicyclic, and aromatic polyisocyanates, preferably aromatic polyisocyanates. The organic polyisocyanates of the present invention are organic polyisocyanates containing two or more isocyanate groups, and therefore include diisocyanates and triisocyanates.

Examples of aromatic polyisocyanates include, but not limited to, toluene diisocyanate (TDI), *p-*phenylene diisocyanate (PPDI), diphenylmethane diisocyanate (MDI), polymethylene polyphenylene polyisocyanate (pMDI), 1,5-naphthalene diisocyanate (NDI), p-xylylenedimethylene diisocyanate (XDI), tetramethylxylylene diisocyanate (TMXDI), trimethyl-1,6-hexamethylene diisocyanate (TMHDI), dimethylbiphenyl diisocyanate (TODI), their prepolymers, polymers and their combinations. The aromatic polyisocyanates include their isomers, such as diphenylmethane diisocyanate (MDI), including 4,4'-diphenylmethane diisocyanate, 2,4-diphenylmethane diisocyanate, and their mixtures.

Pure aliphatic polyisocyanates include, but not limited to, hexamethylene diisocyanate (HDI), pentamethylene diisocyanate (PDI), their prepolymers, polymers and their combinations.

Alicyclic polyisocyanates include, but not limited to, methylcyclohexyldiisocyanate (HTDI), 4,4'-dicyclohexylmethane diisocyanate (H₁₂MDI), isophorone diisocyanate (IPDI), naphthalene diisocyanate (NDI), 1,4-cyclohexane diisocyanate (CHDI), cyclohexanedimethylene diisocyanate (HXDI), methylcyclohexyldiisocyanate (HTDI), norbornene diisocyanate (NBDI), their prepolymers, polymers and their combinations.

In the present invention, the organic polyisocyanate is preferably polymethylene polyphenylene polyisocyanate, also known as crude MDI in the field.

In the present invention, the viscosity of the organic polyisocyanate is preferably 20-300 mPa·s, particularly preferably 50-250 mPa·s, measured at 25°C according to DIN 53019-1-3.

The organic polyisocyanate may comprise dimers, trimers, tetramers, pentamers, other polymers of the polyisocyanates, or a combination thereof.

The organic polyisocyanate in the present invention also comprises, of course, the embodiment of two or more different organic polyisocyanates (such as a mixture of MDI and TDI). This is also the case with the polyisocyanates of the same category, thus it is also suitable for different MDI types, for example. All organic polyisocyanates for preparing polyurethane resin are called component A.

In the present invention, the molar ratio of isocyanate groups in component A to active hydrogen in component B is 0.9-1.5, or 0.95-1.3. The active hydrogen in component B refers to the hydrogen atoms that can react with the isocyanate groups in component A, including the hydrogen on hydroxyl groups and the hydrogen on amino groups.

In the present invention, the isocyanate reactive component B comprises one or more organic polyols and optionally a chain extender and/or a crosslinker.

In an embodiment of the present invention, the isocyanate reactive component consists of one or more organic polyols, or consists of one or more organic polyols and a chain extender and/or a crosslinker. Usually, component B does not comprise non isocyanate reactive components or other additives than chain extenders and crosslinkers, such as reactive flame retardants.

In the present invention, the average functionality of the isocyanate reactive component B is 3.01-8.0, preferably 3.01-7.0. The average functionality (F) is the weighted mean of the various functionalities of all organic polyols, chain extenders, and crosslinkers in the isocyanate reactive component, which is represented by formula (a), wherein *f₁, f₂, f₃... fₙ* is the functionality of each organic polyol, chain extender, and crosslinker, and *w₁, w₂, w₃... wₙ* is the mass percentages of each organic polyol, chain extender, and crosslinker based on the isocyanate reactive component B: $F = \frac{{f}_{1} {w}_{1} + {f}_{2} {w}_{2} + {f}_{3} {w}_{3} + ⋯ + {f}_{n} {w}_{n}}{{w}_{1} + {w}_{2} + {w}_{3} + ⋯ + {w}_{n}}$ Formula (a)

The functionality of the organic polyol, chain extender, or crosslinking agent in the present invention refers to the number of active hydrogen atoms contained in each molecular chain. When the active hydrogen is in the hydroxyl group, the functionality may be calculated by the formula: functionality = hydroxyl value × number average molecular weight / 56100. When the active hydrogen is in the amino group, the functionality may be calculated by the formula: functionality = amine value × number average molecular weight / 56100, wherein the number average molecular weight is determined by gel permeation chromatography (GPC) according to GB/T 21863-2008, the hydroxyl value is determined according to ISO 14900-2017, and the amine value is determined according to ASTM D 2073.

The organic polyol of the present invention comprises all polyols known to those skilled in the field of polyurethanes, especially one or more of polyether polyols, polyester polyols, polyether ester polyols, polycarbonate polyols, polyolefin polyols and natural oil-based polyols and the like. The organic polyols of the present invention also comprise, of course, embodiments of two or more different organic polyols, such as combinations of polyether polyols and polyester polyols. This is also the case with the organic polyols of the same category, including one or more organic polyols of the same category, such as the combination of two polyether polyols.

The polyether polyols are conventional oligomers or polymers with ether bonds (-O-) in the molecular chain and two or more hydroxyl groups in the end groups and/or side groups. The polyether polyol can be prepared by a known process, for example, by reacting an olefin oxide with a starter in the presence of a catalyst. The catalyst includes, but not limited to, alkaline hydroxide, alkaline alkoxide, antimony pentachloride, boron fluoride etherate, or a combination thereof. The olefin oxide includes, but not limited to, tetrahydrofuran, ethylene oxide, propylene oxide, 1,2-butylene oxide, 2,3-butylene oxide, styrene oxide, or any their combination of two or more, particularly preferably ethylene oxide and/or propylene oxide. The starter may be adjusted according to the properties, such as functionality and viscosity of the polyether polyol, preferably but not limited to one or more of polyols, polyamines and alcohol amine compounds. The polyols include, but not limited to, one or more of sorbitol, water, ethylene glycol, 1,2-propanediol, 1,3-propanediol, diethylene glycol, dipropylene glycol, trimethylolpropane, glycerin, pentaerythritol, xylitol, mannitol, sucrose, bisphenol A, bisphenol S, and a combination thereof. The polyamines include, but not limited to, ethylenediamine, propylenediamine, butylenediamine, ethylenediamine, hexamethylenediamine, diethylenetriamine, diethylenetriamine, toluenediamine, or combinations thereof. The alcohol amine compounds include triethanolamine.

**In** one embodiment of the present invention, the isocyanate reactive component comprises at least one polyether polyol, and may also comprise two or more polyether polyols.

**In** an embodiment of the present invention, the number average molecular weight of the polyether polyol is 300-2000, determined according to GB/T 21863-2008.

It is not required in the present invention that the functionality of each organic polyol is in the range of 3.01-8.0 or 3.01-7.0, but rather that the average functionality of the isocyanate reactive component is within said range.

**In** an embodiment of the present invention, the functionality of the polyether polyol is 2.0-8.0, preferably 3.0-8.0.

In an embodiment of the present invention, the hydroxyl value of the polyether polyol is 200-1000 mgKOH/g; the hydroxyl value refers to the number of milligrams of potassium hydroxide equivalent to the hydroxyl group in 1g of the sample, measured in accordance with ISO 14900-2017.

Polyester polyols in the present invention may be aliphatic or aromatic polyester polyols, preferably aliphatic polyester polyols. The polyester polyols may be prepared by reacting a dicarboxylic acid or a dicarboxylic acid anhydride with a polyol. The dicarboxylic acid includes aliphatic carboxylic acids and aromatic carboxylic acids containing 2-12 carbon atoms, which include succinic acid, malonic acid, glutaric acid, adipic acid, heptanoic acid, octanedioic acid, azelaic acid, sebacic acid, dodecanedioic acid, maleic acid, fumaric acid, phthalic acid, isophthalic acid, isophthalic acid, terephthalic acid, and a combination thereof. The dicarboxylic acid anhydride includes phthalic anhydride, tetrachlorophthalic anhydride, maleic anhydride, and a combination thereof. The polyol reacted with the dicarboxylic acid or dicarboxylic acid anhydride includes ethylene glycol, diethylene glycol, 1,2-propanediol, 1,3-propanediol, dipropylene glycol, 1,3-butanediol, methyl propylene glycol, 1,4-butanediol, 1,5-pentanediol, 3-methyl-1,5-pentanediol, 2,4-diethyl-1,5-pentanediol, 2,2,4-trimethyl-1,3-pentanediol, 1,6-hexanediol, neopentyl glycol, 1,10-decanediol, glycerol, trimethylolpropane, or a combination thereof. The polyester polyols may also include those prepared from lactones. The polyester polyol prepared from lactones is preferably, but not limited to, ε-caprolactone.

In an embodiment of the present invention, the number average molecular weight of the polyester polyol is 400-3000, determined according to GB/T 21863-2008.

In an embodiment of the present invention, the functionality of the polyester polyol is 2.0-6.0.

In an embodiment of the present invention, the hydroxyl value of the polyester polyol is 80-600 mgKOH/g. The hydroxyl value refers to the number of milligrams of potassium hydroxide equivalent to the hydroxyl group in 1g of the sample, measured in accordance with ISO 14900-2017.

Component B of the present invention optionally comprises a crosslinker and/or a chain extender. Suitable crosslinkers and/or chain extenders are typically multifunctional compounds having multiple isocyanate-reactive groups and a number average molecular weight of 60-400 as determined in accordance with GB/T 21863-2008, such as one or more of polyamines, polyols, and alkanolamines.

In an embodiment of the present invention, the functionality of the crosslinker and/or chain extender is 2.0-8.0, preferably 2.0-4.0.

In an embodiment of the present invention, the crosslinker and/or chain extender include one or more of ethylene glycol, diethylene glycol, 1,2-propanediol, 1,3-propanediol, dipropylene glycol, 1,3-butanediol, methylpropanediol, 1,4-butanediol, 1,5-pentanediol, 3-methyl-1,5-pentanediol, 2,4-diethyl-1,5-pentanediol, 2,2,4-trimethyl-1,3-pentanediol, 1,6-hexanediol, neopentyl glycol, 2-methyl-2,4-pentanediol, 1,10-decanediol, glycerol, trimethylolpropane, 3,3'-dichloro-4,4'-diaminodiphenylmethane (MOCA), dimethylthiotoluene diamine (DMTDA), diethyltoluene diamine (DETDA), 4,4'-methylenebis(3-chloro-2,6-diethylaniline) (MCDEA), ethanolamine, diethanolamine, and triethanolamine.

In an embodiment of the present invention, the content of the crosslinker and/or chain extender is 0.1%-30%, preferably 3%-27%, based on the total mass of components B to E.

The polyurethane composition in the present invention may further optionally comprise component D, a flame retardant.

The flame retardant in the present invention may be various conventional flame retardants in the field, including but not limited to a reactive flame retardant D1 and/or a non-reactive flame retardant D2.

The reactive flame retardant D1 is a flame retardant whose flame retardant components are chemically bonded into polyurethane materials, including but not limited to one or more of tetrabromobenzenedimethanol, tetrabromophthalate, tris(dipropyleneglycol)phosphite (P430), tris(polyoxyalkylene)phosphate, tris(polyoxyalkylene)phosphite, N,N-di(2-hydroxyethyl)aminomethylphosphonic acid dimethyl ester, N,N-di(2-hydroxyethyl)aminomethylphosphonic acid diethyl ester, a solution of tri(cyanated polyol) phosphate dibromopentanediol in polyether polyol, brominated pentaerythritol, brominated, dechlorinated and methoxylated product of the polymer of 2-butyne-1,4-diol and 2-(chloromethyl)ethyleneoxide (CAS No. 68441-62-3).

In an embodiment of the present invention, the reactive flame retardant D1 is tetrabromophthalate and/or brominated, dechlorinated and methoxylated product of the polymer of 2-butyne-1,4-diol and 2-(chloromethyl)ethyleneoxide (CAS No. 68441-62-3).

The non-reactive flame retardant D2 refers to a flame retardant that has a flame retardant effect but does not participate in the polyurethane reaction, including but not limited to one or more of halogenated phosphate flame retardants, phosphonate flame retardants, and inorganic solid flame retardants. The halogenated phosphate flame retardants may be selected from one or more of tris(2-chloropropyl)phosphate (TCPP), tris(2-chloroethyl)phosphate (TCEP), tris(dichloropropyl)phosphate (TDCPP), tris(dibromopropyl)phosphate, tetrakis(2-chloroethyl) ethylene diphosphate, bis[di(2-chloroethyl)] diethylene glycol phosphate, 2,2-dimethyl-3-chloropropyl bis(1,3-dichloro-2-propyl) phosphate, 2,2-dimethyl-3-bromo-propyl-β-bromoethyl phosphate and diphosphate and polyphosphate. The phosphonate flame retardants may be selected from one or more of dimethyl methylphosphonate (DMMP), diethyl ethylphosphonate, dimethyl propylphosphonate, triisopropylphenyl phosphate, and triethyl phosphate. Inorganic solid flame retardants may be selected from one or more of melamine and derivatives thereof, red phosphorus and complexes thereof, and aluminum hydroxide.

In an embodiment of the present invention, the non-reactive flame retardant D2 is one or more of tris(2-chloropropyl) phosphate (TCPP), tris(2-chloroethyl) phosphate (TCEP), dimethyl methylphosphonate (DMMP), diethyl ethylphosphonate, and dimethyl propylphosphonate.

The content of the flame retardant in the polyurethane composition generally needs to reach a certain amount to achieve the flame retardant effect. In an embodiment of the present invention, the content of the flame retardant of component D is 5%-60%, preferably 15%-55%, based on the total mass of components B to E. The flame retardant level of the polyurethane composite of the present invention may reach a level of UL-94 V-2, preferably UL-94 V-1, more preferably UL-94 V-0 or UL-94 5VA, which is tested according to standard UL-94 with the thickness of the test sample of 1.5mm.

In an embodiment of the present invention, the flame retardant of component D is a combination of a reactive flame retardant D1 and a non-reactive flame retardant D2, wherein the mass ratio of D1 to D2 is preferably (0-2):1, (0.01-2):1, and more preferably (0.1-1):1.

The polyurethane composition in the present invention may further optionally comprise component E, one or more additives conventional in the art. The additives refer to other additives than the chain extender and crosslinker of component B, the catalyst of component C, and the flame retardant of component D, including one or more of water absorbing agents, light stabilizers, antioxidants, defoamers, internal release agents, color paste, anti UV absorbers, colorants, fillers, smoke inhibitors, anti-static agents, diluents, coupling agents, surface wetting agents, leveling agents, thixotropes, plasticizers, foaming homogenizer, and free radical reaction inhibitors, or a combination thereof.

In a preferred embodiment of the present invention, the polyurethane composition does not comprise foaming agents.

In an embodiment of the present invention, the content of the component E is 0.01%-10%, preferably 0.5%-5%, based on the total mass of components B to E.

In the present invention, the fiber layer may comprise at least one layer of fiber felt and/or fiber fabric, or two or more layers of fiber felt, two or more layers of fiber fabric, or a combination of two or more layers of fiber felt and fiber fabric. For the case of two or more fiber layers, it may be a combination of two or more identical layers of fiber felt or fiber fabric, or a combination of different layers of fiber felt or fiber fabric.

In the present invention, the fiber felt is a thin sheet product conventional in the art, which is made by combining long fibers and/or short cut fibers in an oriented or non-oriented manner through chemical bonding, thermal bonding, or mechanical action, and may also include non-woven fabrics and nonwovens. The fiber fabric includes braided fabrics, knitted fabrics, and woven fabrics. The example of the fiber includes natural fibers, glass fibers, carbon fibers, polyester fibers, nylon fibers, basalt fibers, boron fibers, silicon carbide fibers, asbestos fibers, metal fibers or a combination thereof. The natural fibers may include fibers of natural plants, such as cotton, linen, flax, and grass, as well as natural animal fibers such as wool, silk, and alpaca wool.

In an embodiment of the present invention, the fiber felt further includes fiber composite felt with, for example, one side being fiber felt and the other side being fiber fabric.

In a preferred embodiment of the present invention, the fiber layer is composed of at least one layer of glass fiber felt and/or at least one layer of glass fiber fabric.

The fiber layer in the present invention preferably comprises 1-8 layers, more preferably 1-5 layers of fiber felt and/or fiber fabric. The unit weight of each layer of fiber felt or fiber fabric may be, for example, 20-1200g/m², preferably 300-800g/m².

In an embodiment of the present invention, the fiber felt is glass fiber felt. The unit weight of the fiber felt may be, for example, 20-1200g/m², preferably 300-800g/m².

In an embodiment of the present invention, the fiber fabric is glass fiber fabric. The unit weight of the fiber fabric is, for example, 20-1200g/m², preferably 300-800g/m².

In an embodiment of the present invention, the fiber layer is glass fiber composite felt with one side being glass fiber felt and the other side being glass fiber fabric. The unit weight of the glass fiber composite felt is, for example, 20-1200g/m², preferably 300-800g/m².

In the present invention, the content of the fiber layer in the polyurethane composite is 40%-75%, preferably 50%-60%, based on the total mass of the polyurethane composite.

In the present invention, the transfer molding process includes spray transfer molding process (STM) and wet transfer molding process (WTM).

The spray transfer molding process usually includes spraying a polyurethane composition onto a fiber layer outside the mold, then transferring the fiber layer coated with the polyurethane composition into the mold, closing the mold, and hot pressing. The wet transfer molding process usually includes injecting or pouring a polyurethane composition onto a fiber layer outside the mold, then transferring the fiber layer coated with the polyurethane composition into the mold, closing the mold, and hot pressing. The polyurethane composition is usually thoroughly mixed before spraying, pouring, or injection, that is, the components of the polyurethane composition are mixed by conventional methods, and preferably sprayed, poured, or injected immediately after thorough mixing.

The spraying in the present invention is typically to apply the polyurethane composition in the form of droplets or atomized liquid onto the fiber layer with a spraying device, such as a nozzle or atomizer. The injection or pouring is usually to pour the polyurethane composition onto the fiber layer in the form of a liquid fluid, and optionally, to spread the liquid fluid on the fiber layer by coating, vibrating, or shaking the fiber layer. During the hot pressing, the liquid fluid can also be spread on the fiber layer, thus the step for coating, vibration, or shaking is not a necessary step.

In the present invention, before applying the polyurethane composition onto the fiber layer, components B to E are usually mixed to obtain a mixture, which is mixed with component A to obtain the polyurethane composition that is immediately sprayed, injected or poured thereafter.

In the present invention, by selecting the organic polyol, chain extender, and crosslinking agent in component B, it is possible to transfer the fiber layer coated with the polyurethane composition into the mold without dripping of the polyurethane composition or passing through the fiber layer, while also allowing the polyurethane composition to penetrate into the pores of the fiber layer.

In the present invention, the polyurethane composition is sprayed, injected or poured onto at least one surface of the fiber layer, and the same operation may also be performed on both surfaces of the fiber layer. For example, the fiber layer is firstly coated on one surface, then flipped over, and coated on the other surface. During the coating, the fiber layer is preferably placed parallel to the ground to make the coating more uniform. It is not recommended that it is placed perpendicular to the ground and coated, which may result in the uneven coating and even flow marks. The coating here includes spraying, injection, and pouring.

In the present invention, the fiber layer may be fixed by conventional support devices, such as robotic arms, during coating. Preferably, the fiber layer is suspended.

In the present invention, when the fiber layer comprises 2 or more layers of fiber felt and/or fiber fabric, it is preferable to stack all fiber felt and/or fiber fabric together to form the fiber layer. The spraying, injection, and pouring are still performed on one or both surfaces of the fiber layer, without the need for each layer of fiber felt and/or fiber fabric to be coated and then stacked to form the fiber layer.

**In** the present invention, the mold temperature is preferably controlled to be 50°C-180 °C, and more preferably 90 °C-130°C, before the prefabricated component is placed into the mold, so that curing of the polyurethane composition in the mold is facilitated.

**In** the present invention, the temperature for hot pressing is 50°C-180°C, more preferably 90°C-130 °C, after the prefabricated component is placed into the mold.

**In** the present invention, during the hot pressing, a pressure is applied to the mold so that the mold clamping pressure is 0.5 MPa-10 MPa, preferably 0.5 MPa-5 MPa. The mold clamping pressure is the strength of the clamping force applied on the mold during clamping, expressed by the clamping force divided by the mold area.

**In** the present invention, the prefabricated component is preferably hot pressed in a mold for a certain period to allow the polyurethane composition to be spread and cured in the mold. The time for hot pressing is generally 2-10 minutes, preferably 2-4 minutes.

The present invention also provides a polyurethane composite obtained by the method for preparing polyurethane composites by transfer molding process.

In the present invention, the thickness of the polyurethane composite is usually of 0.4 mm to 10 mm, which may be adjusted according to application requirements, such as 2 mm to 8 mm, 2 mm to 5 mm.

In the present invention, the density of the polyurethane composite is usually of 1.5 g/cm³ to 2.2 g/cm³, which may be adjusted according to application requirements.

The polyurethane composite of the present invention may be used in the upper cover, bottom cover or housing of the battery pack for electric vehicles or energy storage boxes, or the housing for energy storage boxes and similar product applications in this technical field.

The present invention also provides a polyurethane composition for preparing polyurethane composites by transfer molding process, comprising the following components:
component A: one or more organic polyisocyanates;
component B: an isocyanate reactive component comprising one or more organic polyols and optionally a chain extender and/or a crosslinker,
wherein the content of the isocyanate reactive component is 20% -95%, preferably 30%-85%, based on the total mass of components B to E; and
wherein the average functionality of the isocyanate reactive component is 3.01-8.0, preferably 3.01-7.0;
component C: a catalyst mixture comprising at least one thermosensitive catalyst C1 and at least one organometallic catalyst C2;
wherein the content of the thermosensitive catalyst C1 is 0.15%-0.9%, and the content of the organometallic catalyst C2 is 0.001%-0.5%, based on the total mass of components B to E;
optionally, component D: a flame retardant; and
optionally, component E: an additive;
wherein the molar ratio of isocyanate groups in component A to active hydrogen in component B is 0.9-1.5, preferably 0.95-1.3

In the present invention, the gel time of the polyurethane composition at room temperature is 2 minutes to 20 minutes, preferably 3 minutes to 15 minutes, more preferably 4 minutes to 10 minutes.

The present invention further provides use of the polyurethane composition in the transfer molding process.

The present invention further provides an article comprising the polyurethane composite, which is preferably the upper cover, bottom cover or housing of the battery pack for electric vehicles or energy storage boxes, or the housing for energy storage box and similar product applications in this technical field.

In an embodiment of the present invention, component B comprises a polyether polyol.

In an embodiment of the present invention, component B comprises a polyether polyol and a crossliker and/or a chain extender.

In an embodiment of the present invention, the number average molecular weight of the polyether polyol is 350-1000, measured according to GB/T 21863-2008.

In an embodiment of the present invention, the functionality of the polyether polyol is 3-7.

In an embodiment of the present invention, the polyether polyol is a propoxylated polyether polyol starting from glycerol and/or sucrose.

In an embodiment of the present invention, the crosslinker and/or the chain extender is glycerol and/or diethyltoluene diamine.

In an embodiment of the present invention, the content of the crosslinker and/or the chain extender is 15%-20%, based on the total mass of components B to E.

In an embodiment of the present invention, the content of the isocyanate reactive component B is 40%-60%, based on the total mass of components B to E.

In an embodiment of the present invention, the average functionality of the isocyanate reactive component B is 3.04-7.

In an embodiment of the present invention, the content of the thermosensitive catalyst C1 is 0.15%-0.9%, and the content of the organometallic catalyst C2 is 0.05%-0.15%, based on the total mass of components B to E.

In an embodiment of the present invention, the thermosensitive catalyst C1 is a blocked DBU, preferably an acid or phenol blocked DBU.

In an embodiment of the present invention, the organic metal catalyst C2 is an organotin catalyst.

In one embodiment of the present invention, the organic metal catalyst C2 is dibutyltin dilaurate.

In an embodiment of the present invention, the thermosensitive catalyst C1 is a salt of 1,8-diazabicyclo[5.4.0]undec-7-ene, a carboxylic acid blocked tertiary amine, and a carboxylic acid blocked cyclic amine.

In an embodiment of the present invention, the reactive flame retardant D1 is tetrabromophthalate.

In an embodiment of the present invention, the non-reactive flame retardant D2 is tri(2-chloropropyl) phosphate.

In an embodiment of the present invention, the mass ratio of the reactive flame retardant D1 to the non-reactive flame retardant D2 is 0.5:1-0.9:1.

In an embodiment of the present invention, the content of the component E is 2%-8%, based on the total mass of components B to E.

In an embodiment of the present invention, the fiber layer is a layer of fiber composite felt.

In an embodiment of the present invention, the method for preparing polyurethane composites by transfer molding process includes the following steps: spraying the polyurethane composition onto at least one surface of at least one fiber layer to obtain a prefabricated component.

In a further embodiment of the present invention, the method includes hot pressing the prefabricated component in a mold with a mold temperature of 90-130°C.

In a further embodiment of the present invention, the method includes applying a mold clamping pressure of 0.5-3MPa on the mold during the hot pressing, and demolding.

In an embodiment of the present invention, the polyurethane composite comprises 50%-70% of fiber layer and 50%-30% of polyurethane resin, based on the total mass of the polyurethane composite.

### Beneficial effect

In the present invention, a polyurethane composition suitable for transfer molding process is selected by adjusting the polyurethane composition. This process is simple to operate and fast, and the polyurethane composition will not drip or pass through the fiber layer during the preparation. The composite produced by the transfer molding process has less surface defects, good weather resistance, uniform distribution of polyurethane resin, as well as good sealing.

The polyurethane composite of the present invention can achieve the flame retardant effects of UL94 V-0 and 5VA, and is particularly suitable for use in shells for electric vehicle batteries, especially for the upper cover and bottom cover, and can be used to produce parts with the same performance at a lower cost.

### Examples

The present invention is further illustrated with specific examples. However, it should be understood that these examples are only used to illustrate the present invention and do not limit the scope of the present invention.

The test methods without specific conditions in the following examples are usually carried out according to the conventional conditions. Unless stated otherwise, all percentages and parts are by weight.

The standards for the testing methods involved in the examples are as follows.

The number average molecular weight is tested according to GB/T 21863-2008.

The viscosity of the isocyanates is determined according to DIN 53019-1-3.

The tensile strength of the resin is tested according to ISO 527-2, and the bending strength of the resin is tested according to ISO 178. The samples for tensile strength and bending strength are prepared by mixing components A to E and injecting them into a mold, curing at 110°C, wherein the mold size is consistent with the sample size in the testing standard.

Sagging test: Mixing 200g of the mixture of components B to E and 200g of component A in a cup, tilting the cup 90 degrees after mixing for 80 seconds, and observing whether the liquid flows.

Gel time: The time period from the beginning of the mixing of the mixture of components B to E with component A(counted as 0 second) to the curing of polyurethane composition (until the composition begins to become viscous and a filament can be pulled out upon contacting with a rod-shaped solid).

The sources and explanations of the components used in the inventive examples are listed in Table 1.

**Table 1**

| Ingredients of the formulation | Supplier | Brand | Component |
|---|---|---|---|
| Component A | Covestro Polymers (China) Co., Ltd. | Desmodur 44CP27 | pMDI |
| | | | NCO=2.7%, |
| | | | Viscosity of 200 mPa. s |
| Component B1 | Shanghai Aladdin Biochemical Technology Co., Ltd. | GLYCERIN | Crosslinker: glycerol with a functionality of 3 and number average molecular weight of 92 |
| Component B2 | Covestro Polymers (China) Co., Ltd. | MULTRANOL 9158 | Propoxylated polyether polyol starting from glycerol, with a hydroxyl value of 481 mKOH/g, a functionality of 3, and a number average molecular weight of 350 |
| Component B3 | Covestro Polymers (China) Co., Ltd. | DESMOPHEN 4030M | Propoxylated polyether polyol starting from sucrose, with a hydroxyl value of 450 mKOH/g, a functionality of 5.2, and a number average molecular weight of 650 |
| Component B4 | Covestro Polymers (China) Co., Ltd. | SUMIPHEN 480J | Propoxylated polyether polyol starting from glycerol and sucrose, with a hydroxyl value of 393 mKOH/g, a functionality of 7, and a number average molecular weight of 1000 |
| Component B5 | Albemarle Corporation | Ethacure 100 | Crosslinker: diethyltoluene diamine, with a functionality of 4 |
| Component C1-1 | Evonik | SA-8 | Thermosensitive catalyst, blocked tertiary amine catalyst |
| Component C1-2 | Momentive | Niax catalyst A-577 | Thermosensitive catalyst, carboxylic acid modified tertiary amine |
| Component C1-3 | Momentive | Niax catalyst A-575 | Thermosensitive catalyst, carboxylic acid modified tertiary amine |
| Component C2-1 | Momentive | UL-29 | Organotin catalyst |
| Component C2-2 | Momentive | UL-6 | Organotin catalyst |
| Component C2-3 | Evonik | Dibutyltin dilaurate | Organotin catalyst |
| Component D1 | Albemarle Corporation | Saytex RB 79 | Reactive flame retardant, tetrabromophthalate |
| Component D2 | Zhejiang Wansheng Co.,Ltd | TCPP | Tris(2-chloropropyl) phosphate |
| Component E1 | Shanghai Bilor New Materials Technology Co., Ltd. | CE19UH1364 | Color paste |
| Component E2 | Covestro Polymers (China) Co., Ltd. | Baydur 08BD319 | Internal releasing agent |
| Fiber layer | Changzhou Saiweilang Composites Co., Ltd | EWRM600/150 | Glass fiber composite felt, with gram weight of 750 g/m², with one side being fiber felt and the other side being fiber fabric |

The formulations of the polyurethane compositions in Examples 1-8 and Comparative Examples 1-5 are shown in Tables 2-3.

### Example 1

Step 1: Preheating the mold at 110°C.

Step 2: Mixing component B, component C, component D, and component E, and then mixing with component A to obtain a polyurethane composition, and spraying the polyurethane composition in the atmospheric environment onto a surface of the glass fiber composite felt, which is clamped with a robotic arm, to obtain a prefabricated component, wherein the mass ratio of polyurethane composition to glass fiber composite felt is 40:60;

Step 3: Moving the prefabricated component obtained in Step 2 into the mold, closing the mold and heat pressing with the mold temperature being kept at 110°C;

Step 4: Applying a mold clamping pressure of 1MPa on the mold; and demolding after 3 minutes to obtain polyurethane composite.

**Table 2**

| | Comparative example 1 | Example 1 | Example 2 | Example 3 |
|---|---|---|---|---|
| Component A | 140 | 140 | 140 | 140 |
| Component B1 | 18 | 18 | 18 | |
| Component B2 | 36 | 36 | | |
| Component B3 | | | 36 | |
| Component B4 | | | | 54 |
| Component B5 | | 2.0 | | |
| Component C1-1 | 0.3 | 0.3 | 0.3 | 0.3 |
| Component C2-1 | 0.1 | 0.1 | 0.1 | 0.1 |
| Component D 1 | 18 | 18 | 18 | 18 |
| Component D2 | 22 | 22 | 22 | 22 |
| Component E1 | 2.6 | 2.6 | 2.6 | 2.6 |
| Component E2 | 3 | 3 | 3 | 3 |
| Average functionality of component B* | 3.0 | 3.04 | 4.47 | 7.0 |
| Molar ratio of NCO to active hydrogen in component B | 1.05 | 1.05 | 1.05 | 1.05 |
| Sagging | Upon the cup being tilted 90 degrees, the liquid is flowable. | Upon the cup being tilted 90 degrees, the liquid is not flowable. | Upon the cup being tilted 90 degrees, the liquid is not flowable. | Upon the cup being tilted 90 degrees, the liquid is not flowable. |
| Gel time | - | 6 min | 6 min | 6 min |
| Surface properties of composites (sprayed surface) | - | The surface of the product is free of pinholes and is smooth | The surface of the product is free of pinholes and is smooth | The surface of the product is free of pinholes and is smooth |
| | | 0-10 pinholes/m² | 0-10 pinholes/m² | 0-10/m² |
| Tensile strength of the resin | - | 65 MPa | 63 MPa | 70 MPa |
| Bending strength of the resin | - | 120 MPa | 120 MPa | 130 MPa |
| Toughness | - | Good toughness, no cracking upon being bent | Good toughness, no cracking upon being bent | Good toughness, no cracking upon being bent |
| Thickness of composites | - | 0.8 mm | 0.8 mm | 0.8 mm |

| | | | | |
|---|---|---|---|---|
| *Average functionality of component B is the average functionality of components B1 to B5 | | | | |

Examples 2-8 and Comparative Examples 1-5 were carried out with the same process as in Example 1, with the difference that the formulation of the polyurethane compositions was different.

As shown in Table 2, sagging in Comparative Example 1 was not satisfied, which resulted in the polyurethane composition dripping or passing through the fiber layer when applied to the fiber layer, and the need for more resin, making it difficult to ensure the weight ratio of polyurethane resin to fiber layer and the quality stability between batches.

As shown in Table 3, Example 2, in which both the thermosensitive catalyst and the organometallic catalyst were simultaneously used, achieved better surface properties, toughness, and strength under the same catalyst dosage, compared to Comparative Examples 2 and 5.

**Table 3**

| | Comparative example 2 | Comparative example 3 | Comparative example 4 | Comparative example 5 | Example 2 | Example 4 | Example 5 | Example 6 | Example 7 | Example 8 |
|---|---|---|---|---|---|---|---|---|---|---|
| Component A | 140 | 140 | 140 | 140 | 140 | 140 | 140 | 140 | 140 | 140 |
| Component B1 | 18 | 18 | 18 | 18 | 18 | 18 | 18 | 18 | 18 | 18 |
| Component B3 | 36 | 36 | 36 | 36 | 36 | 36 | 36 | 36 | 36 | 36 |
| Component C1-1 | 0.4 | 0.1 | 1.0 | | 0.3 | 0.15 | 0.5 | 0.9 | | |
| Component C1-2 | | | | | | | | | 0.3 | |
| Component C1-3 | | | | | | | | | | 0.3 |
| Component C2-1 | | | | 0.4 | 0.1 | 0.1 | 0.1 | 0.1 | | |
| Component C2-2 | | | | | | | | | 0.1 | |
| Component C2-3 | | | | | | | | | | 0.1 |
| Component D 1 | 18 | 18 | 18 | 18 | 18 | 18 | 18 | 18 | 18 | 18 |
| Component D2 | 22 | 22 | 22 | 22 | 22 | 22 | 22 | 22 | 22 | 22 |
| Component E1 | 2.6 | 2.6 | 2.6 | 2.6 | 2.6 | 2.6 | 2.6 | 2.6 | 2.6 | 2.6 |
| Component E2 | 3 | 3 | 3 | 3 | 3 | 3 | 3 | 3 | 3 | 3 |
| Average functionality of component B | 4.47 | 4.47 | 4.47 | 4.47 | 4.47 | 4.47 | 4.47 | 4.47 | 4.47 | 4.47 |
| Molar ratio of NCO to active hydrogen in component B | 1.05 | 1.05 | 1.05 | 1.05 | 1.05 | 1.05 | 1.05 | 1.05 | 1.05 | 1.05 |
| Surface properties of composites (sprayed surface) | Few pinholes on the surface of the product 10-30/m² | Pinholes and bubbles on the surface of the product >30/m² | Pinholes and bubbles on the surface of the product >30/m² | Pinholes and bubbles on the surface of the product >30/m² | Substantially free of pinholes on the surface of the product, and smooth 0-10/m² | Substantially free of pinholes on the surface of the product, and smooth 0-10/m² | Substantially free of pinholes on the surface of the product, and smooth 0-10/m² | Substantially free of pinholes on the surface of the product, and smooth 0-10/m² | Substantially free of pinholes on the surface of the product, and smooth 0-10/m² | Substantially free of pinholes on the surface of the product, and smooth 0-10/m² |
| Tensile Strength of the resin | 40 MPa | 30 MPa | 55 MPa | 70 MPa | 70 MPa | 65 MPa | 63 MPa | 70 MPa | 70 MPa | 70 MPa |
| Bending strength of the resin | 100 MPa | 80 MPa | 110 MPa | 130 MPa | 130 MPa | 120 MPa | 120 MPa | 120 MPa | 120 MPa | 130 MPa |
| Thickness of composites | 0.8 mm | 0.8 mm | 0.8 mm | 0.8 mm | 0.8 mm | 0.8 mm | 0.8 mm | 0.8 mm | 0.8 mm | 0.8 mm |
| Gel time | 10 min | 10 min | 10 min | 3 min | 6 min | 6 min | 5 min | 5 min | 6 min | 6 min |
| Notes | Brittle and prone to cracking | Brittle and prone to cracking | Brittle and prone to cracking | Good toughness, no cracking | Good toughness, no cracking | Good toughness, no cracking | Good toughness, no cracking | Good toughness, no cracking | Good toughness, no cracking | Good toughness, no cracking |

Although the specific embodiments of the present invention are described above, those skilled in the art should understand that this is only illustrative, and the protection scope of the present invention is defined by the appended claims. Those skilled in the art can make various changes or modifications to these embodiments without departing from the principle and essence of the present invention, but these changes and modifications fall within the protection scope of the present invention.

## Claims

1. Method for preparing polyurethane composites by transfer molding process, comprising the following steps:
spraying, injecting or pouring a polyurethane composition onto at least one surface of at least one fiber layer to obtain a prefabricated component;
hot pressing the prefabricated component in a mold with a mold temperature of 50-180°C, and demolding;
wherein the polyurethane composite comprises 40wt.%-75wt.% of fiber layer and 25wt.%-60wt.% of polyurethane resin, based on the total mass of the polyurethane composite; and
wherein the polyurethane resin is obtained from the polyurethane composition comprising:
component A: one or more organic polyisocyanates;
component B: an isocyanate reactive component comprising one or more organic polyols and
optionally a chain extender and/or a crosslinker,
wherein the content of the isocyanate reactive component is 20wt.%-95wt.%, preferably 30wt.%-85wt.%, based on the total mass of components B to E; and
wherein the average functionality of the isocyanate reactive component is 3.01-8.0, preferably 3.01-7.0;
component C: a catalyst mixture comprising at least one thermosensitive catalyst C1 and at least one organometallic catalyst C2;
wherein the content of the thermosensitive catalyst C1 is 0.15wt.%-0.9wt.%, preferably 0.15wt.% - 0.8wt.%, and the content of the organometallic catalyst C2 is 0.001wt.%-0.5wt.%, preferably 0.002wt.%-0.2wt.%, based on the total mass of components B to E;
optionally, component D: a flame retardant; and
optionally, component E: an additive;
wherein the molar ratio of isocyanate groups in component A to active hydrogen in component B is 0.9-1.5, preferably 0.95-1.3; and
wherein the fiber layer comprises at least one layer of fiber felt and/or fiber fabric.

2. Method according to claim 1, **characterized in that** the thermosensitive catalyst is an acid or phenol blocked amine catalyst and/or amidine catalyst, wherein the blocking is carried out by reacting an amine and/or amidine with a carboxylic acid or a phenol.

3. Method according to claim 2, **characterized in that** the carboxylic acid is selected from one or more of formic acid, ethylhexanoic acid, acetic acid, oleic acid, isooctanoic acid, methacrylic acid, trifluoroacetic acid, benzoic acid, cyanoacetic acid, and 5-hydroxyisophthalic acid; the phenol is selected from one or more of phenol, catechol, and 2-hydroxyacetophenone; the amine catalyst is selected from one or more of 1,4-diazabicyclo[2.2.2]octane, bis(dimethylaminoethyl)ether, trimethylamine, triethylamine, tripropylamine, tributylamine, dimethylcyclohexylamine, dimethylbenzylamine, dibutylcyclohexylamine, dimethylethanolamine, triethanolamine, diethylethanolamine, ethyldiethanolamine, dimethylisopropanolamine, dimethyloctylamine, triisopropanolamine, triethylenediamine, tetramethyl-1,3-butanediamine, N,N,N',N'-tetramethylethylenediamine, N,N,N',N'-tetramethyl-1,6-hexanediamine, N,N,N',N',N'-pentamethyldiethylenetriamine, bis(2-dimethylaminoethoxy)methane, N,N,N'-trimethyl-N'-(2-hydroxyethyl)ethylenediamine, N,N-dimethyl-N',N'-(2-hydroxyethyl)ethylenediamine, tetramethylguanidine, N-methylpyridine, N-ethylpyridine, N-methylmorpholine, N-ethylmorpholine, 1,4-dimethylpiperidine, 1,2,4-trimethylpiperidine, N-(2-dimethylaminoethyl)morpholine, and 1-methyl-4-(2-dimethylamino)piperidine; and the amidine catalyst is selected from 1,8-diazabicyclo[5.4.0]undec-7-ene and/or 1,5-diazabicyclo[4.3.0]non-5-ene.

4. Method according to any one of claims 1 to 3, **characterized in that** the organometallic catalyst C2 is a metal carboxylate and/or a metal alkyl compound, and the metal element is preferably selected from one or more of tin, potassium, titanium, zirconium, hafnium, bismuth, zinc, aluminum, and iron, preferably one or more of potassium, tin, and bismuth, more preferably the organometallic catalyst C2 is selected from one or more of dibutyltin dilaurate, stannous octoate, tin octanoate, dioctyltin dithiol, dibutyltin oxide, dibutyltin diacetate, di(dodecylthio)dibutyltin, tin acetate, tin ethylhexanoate, tin laurate, dibutyltin diacetate, dibutyltin maleate, dioctyltin diacetate, potassium acetate, potassium formate, potassium isooctanoate, potassium acetate, bismuth carboxylate, bismuth neodecanoate, bismuth ethylhexanoate, and bismuth octanoate.

5. Method according to any one of claims 1 to 5, **characterized in that** the organic polyols include one or more of polyether polyols, polyester polyols, polyether ester polyols, polycarbonate polyols, polyolefin polyols, and natural oil-based polyols, preferably polyether polyols and/or polyester polyols, more preferably two or more polyether polyols.

6. Method according to claim 6, **characterized in that** the number average molecular weight of the polyether polyol is 300-2000, tested according to GB/T 21863-2008; the functionality of the polyether polyol is 2-8, preferably 3-8; the hydroxyl value of the polyether polyol is 200-1000 mgKOH/g, tested according to ISO 14900-2017; the number average molecular weight of the polyester polyol is 400-3000, tested according to GB/T 21863-2008; the functionality of the polyester polyol is 2-6; and the hydroxyl value of the polyester polyol is 80-600 mgKOH/g, tested according to ISO 14900-2017.

7. Method according to any one of claims 1 to 7, **characterized in that** the crosslinker and/or chain extender are multifunctional compounds with a number average molecular weight of 60-400 and having multiple isocyanate-reactive groups, including one or more of polyamines, polyols, and alkanolamines; and the functionality of the crosslinker and/or chain extender is 2-8, preferably 2-4.

8. Method according to claim 8, **characterized in that** the crosslinker and/or chain extender include one or more of ethylene glycol, diethylene glycol, 1,2-propanediol, 1,3-propanediol, dipropylene glycol, 1,3-butanediol, methylpropanediol, 1,4-butanediol, 1,5-pentanediol, 3-methyl-1,5-pentanediol, 2,4-diethyl-1,5-pentanediol, 2,2,4-trimethyl-1,3-pentanediol, 1,6-hexanediol, neopentyl glycol, 2-methyl-2,4-pentanediol, 1,10-decanediol, glycerol, trimethylolpropane, 3,3'-dichloro-4,4'-diaminodiphenylmethane, dimethylthiotoluenediamine, diethyltoluenediamine, 4,4'-methylene bis(3-chloro-2,6-diethylaniline), ethanolamine, diethanolamine, and triethanolamine, more preferably the content of the crosslinker and/or chain extender is 0.1 wt.%-30wt.%, preferably 3wt.% -27 wt.%, based on the total mass of components B to E.

9. Method according to any one of claims 1 to 10, **characterized in that** the flame retardant of component D includes a reactive flame retardant D1 and/or a non-reactive flame retardant D2; and the reactive flame retardant D1 is preferably selected from one or more of tetrabromobenzenedimethanol, tetrabromophthalate, tris(dipropyleneglycol)phosphite, tris(polyoxyalkylene)phosphate, tris(polyoxyalkylene)phosphite, N,N-di(2-hydroxyethyl)aminomethylphosphonic acid dimethyl ester, N,N-di(2-hydroxyethyl)aminomethylphosphonic acid diethyl ester, a solution of tri(cyanated polyol) phosphate dibromopentanediol in polyether polyol, brominated pentaerythritol, brominated, dechlorinated and methoxylated product of the polymer of 2-butyne-1,4-diol and 2-(chloromethyl)ethyleneoxide; the non-reactive flame retardant D2 preferably includes one or more of tris(2-chloropropyl)phosphate, tris(2-chloroethyl)phosphate, tris(dichloropropyl)phosphate, tris(dibromopropyl)phosphate, tetra(2-chloroethyl) ethylidene diphosphate, bis[di(2-chloroethyl)] diethyleneglycol phosphate, 2,2-dimethyl-3-chloropropylbis(1,3-dichloro-2-propyl)phosphate, 2,2-dimethyl-3-bromo-propyl-β-bromoethylphosphate, dimethyl methylphosphonate, diethyl ethylphosphonate, dimethyl propylphosphonate, triisopropylphenyl phosphate, and triethyl phosphate.

10. Method according to any one of claims 1 to 13, **characterized in that** the temperature for hot pressing is 50°C-180°C, preferably 90°C-130°C; and/or the mold clamping pressure for hot pressing is 0.5 MPa-10 MPa, preferably 0.5 MPa-5 MPa; and/or the time for hot pressing is 2-10 minutes, preferably 2-4 minutes.

11. Polyurethane composite obtained by the method for preparing polyurethane composites by transfer molding process according to any one of claims 1-14.

12. Polyurethane composition for preparing polyurethane composites by transfer molding process, comprising the following components:
component A: one or more organic polyisocyanates;
component B: an isocyanate reactive component comprising one or more organic polyols and
optionally a chain extender and/or a crosslinker,
wherein the content of the isocyanate reactive component is 20wt.% -95wt.%, preferably 30wt.%-85wt.%, based on the total mass of components B to E; and
wherein the average functionality of the isocyanate reactive component is 3.01-8.0, preferably 3.01-7.0;
component C: a catalyst mixture comprising at least one thermosensitive catalyst C1 and at least one organometallic catalyst C2;
wherein the content of the thermosensitive catalyst C1 is 0.5wt.%-0.9wt.%, preferably 0.15wt.%-0.8wt.%, and the content of the organometallic catalyst C2 is 0.001wt.%-0.5wt.%, preferably 0.002wt.%-0.2wt.%, based on the total mass of components B to E;
optionally, component D: a flame retardant; and
optionally, component E: an additive;
wherein the molar ratio of isocyanate groups in component A to active hydrogen in component B is 0.9-1.5, preferably 0.95-1.3, and/or the gel time at room temperature is 2 minutes to 20 minutes, preferably 3 minutes to 15 minutes, more preferably 4 minutes to 10 minutes.

13. Use of the polyurethane composition according to claim 16 or 17 in the transfer molding process.

14. Article comprising the polyurethane composite according to claim 15.

15. Article according to claim 19, **characterized in that** it is the upper cover, bottom cover or housig of the battery pack for electric vehicles or energy storage boxes, or the housing for energy storage boxes.
